# EUROPÄISCHE PATENTSCHRIFT

(11) **EP 0 756 842 B1**
(45) Veröffentlichungstag und Bekanntmachung des Hinweises auf die Patenterteilung: **09.12.1998**
(21) Anmeldenummer: 95111981.7
(22) Anmeldetag: 31.07.1995
(51) Int. Cl.: A47J 31/40

(54) **Brühkopf einer Espressomaschine**
Brewing head for an espresso machine
Tête d'infusion d'une machine espresso

(43) Veröffentlichungstag der Anmeldung: 05.02.1997
(73) Patentinhaber: Eugster/Frismag AG, 8590 Romanshorn (CH)
(72) Erfinder: Frei, Hans-Peter, CH-8618 Oetwil am See (CH)
(74) Vertreter: Schubert, Siegmar, Dipl.-Ing.

(56) Entgegenhaltungen:
- EP-A- 0 192 797
- EP-A- 0 270 141
- EP-A- 0 443 054
- EP-A- 0 536 616
- DE-A- 3 422 432
- GB-A- 2 008 394

## Beschreibung

Die Erfindung betrifft einen Brühkopf einer Espressomaschine mit einer druckdicht verschließbaren Brühkammer mit einem Einlaß für Heißwasser, mit einer Einfüllöffnung für frisches Espressomehl, mit einem Auslauf für frisch gebrühten Espresso und mit einem in der Brühkammer vorgesehenen, zwangsgesteuerten Hubkolben mit einem Siebboden, über den nach dem Brühen der Kuchen bis zum oberen Rand der Brühkammer angehoben wird, von wo der Kuchen über ein Räumelement seitlich abgeschoben wird.

Eine Espressomaschine mit einem Brühkopf, der diese Merkmale aufweist, ist in der EP 0 443 054 B1 beschrieben. Dort sind sowohl die Wasserzufuhr als auch der Räumschieber auf einem linear über der Brühkammer verschiebbaren Schlitten angeordnet. Diese Lösung hat die Nachteile, daß die während des Brühvorganges, der unter einem Druck von ca. 12 bar stattfindet, notwendige Dichtung zwischen der Brühkammer und dem Schlitten durch Dichtmittel erfolgen muß, die im Bereich der Gleitebene liegen und deshalb hohem Verschleiß unterliegen. Außerdem erfordert die lineare Hin- und Herbewegung des Schlittens eine sehr komplizierte Steuermechanik und eine flexible Wasserzuführung, die ebenfalls unter einem Druck von 12 bar steht und die daher eine Gefahrenquelle darstellt.

Ein Brühkopf mit den Merkmalen des Oberbegriffs von Patentanspruch 1, bei dem die Abdichtungsprobleme im Bereich der Brühkammer nicht mehr auftreten, ist aus der DE-A-34 22 432 entnehmbar. Gemäß dieser Schrift ist der Brühkopf zweiteilig ausgebildet, wobei er in ein gehäusefestes Unterteil und in ein bewegliches Oberteil unterteilt ist, das Unterteil die Brühkammer und den Hubkolben enthält, und das Oberteil einen Brühkolben enthält, der von oben in die Brühkammer eintauchen kann.

Der Brüh- oder Filterkolben ist gemäß dieser Schrift an einer Stange gehaltert, die wiederum in senkrechter Richtung verstellbar an einem fahnenartigen Träger geführt ist, der oberhalb des Unterteils verstellbar ist. In senkrechter Richtung ist der Brühkolben mittels eines Betätigungshebels verstellbar, der Winkelverstellungen in einer senkrechten Ebene ausführen kann. Ferner ist der Brühkolben mittels des fahnenartigen Trägers um eine diesen tragende Welle über einen Kreissektor von etwa 40° aus der Stellung in Ausrichtung über dem Unterteil und von diesem weg und umgekehrt wieder zurück verschwenkbar. Für die Aufwärtsbewegung des Hubkolbens dient ein Hebel mit senkrechter Stange mit einer Nase, auf die ein am Betätigungshebel vorgesehener Stift einwirkt. Für die Abwärtsbewegung des Hubkolbens ist ein Kipphebel vorgesehen, der an einem Hauptgestell so angebracht ist, daß er am Kopf der senkrechten Stange angreift, und der ferner über einen Bügel mit dem fahnenartigen Träger verbunden ist, damit beim seitlichen Verschieben des fahnenartigen Trägers mit Entfernung des Brühkolbens vom Unterteil weg der Hubkolben nach unten verstellt werden kann. Zu Beginn eines Bedienzyklusses steht der Hubkolben noch oben und wird durch die Seitwärtsbewegung des Brühkolbens mittels des fahnenartigen Trägers vom Unterteil weg nach unten bewegt. Nach Einfüllen des Kaffeepulvers in das Unterteil wird der Brühkolben in entgegengesetzter Drehrichtung zurück in Ausrichtung mit dem Unterteil verschwenkt und mittels des Betätigungshebels nach unten bewegt. Nach dem Brühvorgang wird der Brühkolben mittels des Betätigungshebels wieder nach oben bewegt und hierdurch wird gleichzeitig der Hubkolben nach oben bewegt. Schließlich wird der fahnenartige Träger mit dem Brühkolben seitlich verschwenkt, um Kaffeereste mit einem Abstreifer entfernen zu können. Insgesamt sind hier demnach die mechanischen Mittel zur Steuerung der Auf- und Abwärtsbewegung des Hubkolbens aufwendig.

Ausgehend von diesem Stand der Technik liegt der Erfindung die Aufgabe zugrunde, einen Brühkopf mit den Merkmalen des Oberbegriffs des Patentanspruchs 1 vorzuschlagen, bei dem die Steuermechanik vereinfacht ist und der trotzdem sehr betriebssicher arbeiten und auch Espresso in sehr guter Qualität liefern kann.

Diese Aufgabe wird durch den Gegenstand des Patentanspruchs 1 gelöst. Vorteilhafte Weiterbildungen sind in den Unteransprüchen definiert.

Wichtig ist es somit, daß der Brühkopf der Espressomaschine in zwei Funktionseinheiten aufgeteilt ist, wobei das Unterteil ortsfest ausgebildet ist und die Brühkammer mit einem allein von der Drehbewegung des Oberteiles gesteuerten Hubkolben zum Ausstoßen des ausgebrühten Kaffeesumpfes beinhaltet.

Das Oberteil ist als Karussell ausgebildet und ist gegenüber dem ortsfesten Unterteil um 360° drehbar. Es beinhaltet neben dem Brühkolben, der während des Brühvorganges in die Brühkammer eintaucht, und einen Räumflügel, der den von dem gesteuerten Hubkolben aus der Brühkammer gehobenen Kaffeesumpf mittels einer Drehbewegung des Oberteils in eine Entsorgungsöffnung transportiert.

Die erfindungsgemäß vorgesehene Zweiteilung des Brühkopfes bringt den weiteren Vorteil mit sich, daß dieser leicht gereinigt werden kann, weil der Oberteil des Brühkopfes leicht vom Unterteil - in einer bestimmten Drehstellung des Karussells - abgenommen werden kann.

Die erwähnte Zweiteilung des Brühkopfes bedingt einen weite ren wichtigen Vorteil, nämlich es ist jetzt auf sehr einfache Art und Weise möglich, das in die Brühkammer eingefüllte Kaffeemehl zu verdichten, was bekanntlich die Qualität des mit der erfindungsgemäßen Maschine hergestellten Espressogetränks verbessert. Hierzu muß man lediglich das Oberteil des Brühkolbens nach unten auf das in die Brühkammer eingefüllte Espressomehl drücken. Diese Bewegung wird beispielsweise über einen geeigneten, vorzugsweise von Hand betätigbaren Hebel, der im Brühkopfoberteil gelagert ist, durchgeführt, der mit dem beweglichen Oberteil des Brühkolbens verbunden ist.

Für die Abdichtung zwischen Oberteil und Unterteil des Brühkopfes genügt eine einfache Ringdichtung (O-Ring) am Außenumfang des kolbenförmigen Brühkolben-Unterteils, wie dies weiter unten noch näher erläutert wird. Diese Dichtung wird im Betrieb wenig beansprucht und hat daher eine sehr hohe Lebensdauer, ganz im Gegensatz zu dem eingangs diskutierten Stand der Technik. Während bei diesem erwähnten Stand der Technik der Kuchen aus verbrauchtem Espressomehl nach dessen Anheben über den Hubkolben mittels eines am erwähnten Schlitten befindlichen halbkreisförmigen Räumglieds seitlich abtransportiert wird, wird es erfindungsgemäß bevorzugt, wenn hierzu ein Räumflügel vorgesehen ist, der in Bezug auf den Kuchen stumpfwinkelig (V-förmig) profiliert ist. Beim Abschieben berührt der Räumflügel den Kuchen daher nur an zwei Punkten und der Kuchen kann sich daher besser vom Räumflügel lösen. Beim genannten Stand der Technik ist dagegen eine Flächenberührung gegeben, weil sowohl der Räumflügel wie auch der Kuchen gleich profiliert sind, nämlich kreisförmig.
Erfindungsgemäß ist eine Kreisbewegung zwischen den beiden Teilen des Brühkopfes vorgesehen. Diese Kreisbewegung wird man gleichzeitig für eine Zwangssteuerung für den Hubkolben benutzt, die konstruktiv viel einfacher ausgebildet werden kann als beim erwähnten Stand der Technik. Gleichzeitig kann damit der Räumflügel längs einer Kreisbahn bewegt werden und der Räumflügel erfüllt somit taktgesteuert seine Aufgabe.

Das in Patentanspruch 5 angesprochene Cremaventil bietet den Vorteil, daß sich in der Brühkammer erst ein gewisser Druck aufbauen muß, ehe der fertige Espresso aus der Brühkammer abgegeben wird. Auch dadurch wird die Qualität des gebrühten Espressos verbessert.

Das in Patentanspruch 6 angesprochene Saugventil saugt die im Auslauf befindlichen Kaffeesudreste zurück und verhindert damit ein Nachtropfen des Espressos aus dem Auslauf.

Es wurde schon erwähnt, daß der Brühkolben vorzugsweise über einen von Hand betätigten Hebel angehoben bzw. abgesenkt wird. Um den Brühkolben beim Brühvorgang ausreichend lange in der abgesenkten Stellung zu belassen, wird es bevorzugt, wenn hier nach Patentanspruch 10 eine Rastverbindung ausgebildet ist, die nach Beendigung des Brühvorgangs, ebenfalls vorzugsweise von Hand, wieder gelöst werden kann, so daß dann der Brühkolben durch den Hebel wieder angehoben werden kann.

Die Drehung des Oberteils nach Art eines Karussells erfolgt vorzugsweise von Hand, kann aber auch motorisch angetrieben sein, und es ist ebenfalls denkbar, die Bewegung des Brühkolbens motorisch zu steuern, obgleich eine Bewegung von Hand, nämlich über den erwähnten Hebel, bevorzugt wird.

Einleitend wurde auch darauf hingewiesen, daS bei der erwähnten europäischen Patentschrift der Einlaß für das Heißwasser als biegsamer Schlauch ausgebildet sein muß, der eine Gefahrenquelle darstellt, weil er unter einem sehr hohen Druck steht. Um diese Gefahrenquelle auszuschalten, wird es erfindungsgemäß nach Patentanspruch 11 bevorzugt, wenn der Einlaß für das Heißwasser in das gehäusefeste Unterteil einmündet, weil man dann auf einen biegsamen Schlauch verzichten kann. Erfindungsgemäß wird hierfür vielmehr ein Rohrstutzen, der mit einer festen Rohrleitung mit dem Heißwassergenerator verbunden ist, verwendet, also ein Material, welches dem herrschenden Druck ohne weiteres standhalten kann, auch nach längerer Betriebszeit.

Die Erfindung wird im folgenden anhand eines Ausführungsbeispiels näher erläutert, aus dem sich weitere wichtige Merkmale ergeben. Es zeigt:

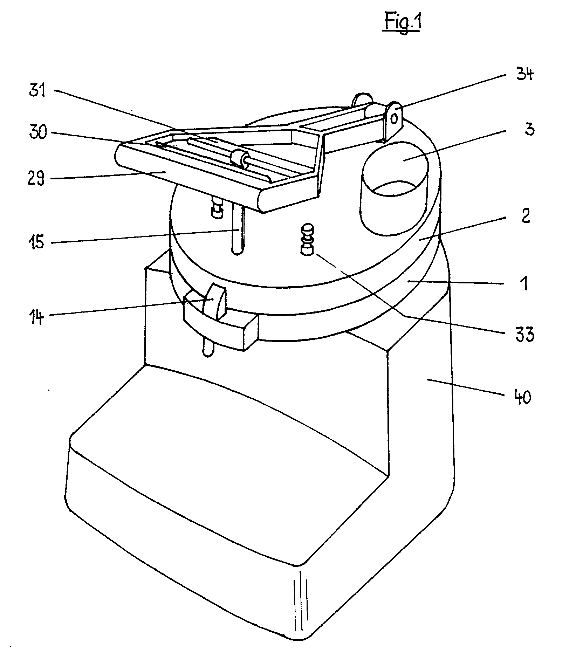

- **Figur 1**: eine perspektivische Ansicht einer Espressomaschine, die mit einem erfindungsgemäßen Brühkopf ausgerüstet ist;
- **Figur 2**: einige Bauelemente des Brühkopfes in einer Schnittdarstellung, wobei die Füllposition für das Espressomehl dargestellt ist, d.h. der Einfüllschacht des Oberteils befindet sich über der Brühkammer und der Hubkolben ist abgesenkt;
- **Figur 3**: eine Schnittansicht entsprechend Figur 2 mit weiteren baulichen Einzelheiten, wobei das Oberteil gegenüber Figur 2 um ca. 120° verdreht ist. Der Brühkolben befindet sich hier über der Brühkammer und der Hubkolben ist abgesenkt;
- **Figur 4**: eine Schnittansicht entsprechend Figur 3, wobei die Brühposition dargestellt ist. Der Brühkolben befindet sich in der Brühkammer und der Hubkolben ist immer noch abgesenkt;
- **Figur 5**: ebenfalls eine Schnittansicht entsprechend den vorhergehenden Figuren, wobei das Oberteil gegenüber der Stellung nach Figur 4 um ca. 120° verdreht ist. Der Räumflügel befindet sich vor dem angehobenen Kaffeesumpf und der Hubkolben ist angehoben zum Ausstoßen des Kaffeemehlkuchens;

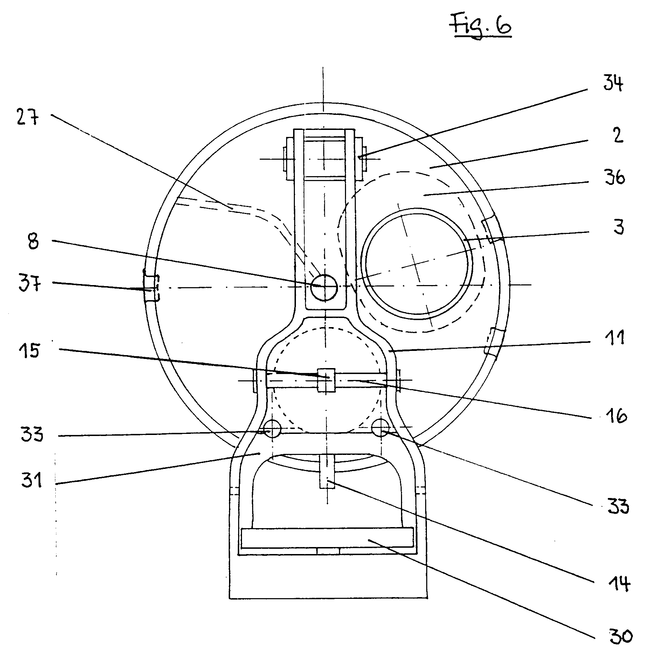

- **Figur 6**: eine Draufsicht auf den Brühkopf;
- **Figur 7**: eine perspektivische Prinzipdarstellung der Situation nach Figur 2;
- **Figur 8**: eine perspektivische Prinzipdarstellung der Situation nach Figur 3;
- **Figur 9**: ebenfalls eine perspektivische Prinzipdarstellung der Situation nach Figur 4 und
- **Figur 10**: eine perspektivische Prinzipdarstellung der Situation nach Figur 5.

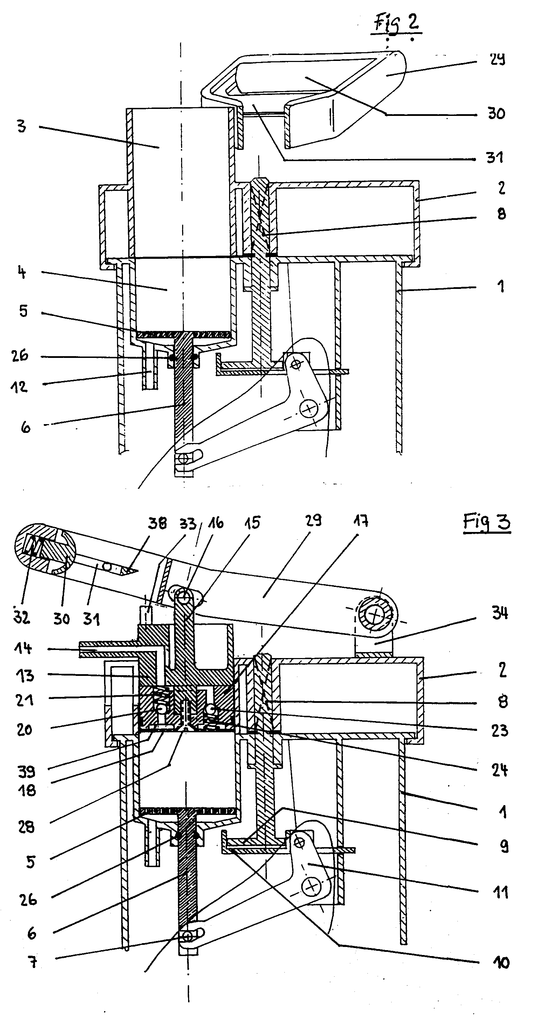

Zu den Figuren 2 - 5 sei nachgetragen, daß diese Schnittbilder des Brühkopfes durch die Mittelachse sind, wobei der Steuerhebel 11 und Teile der Steuerkurve 9 sowie der Kulisse 10 nicht geschnitten dargestellt sind.

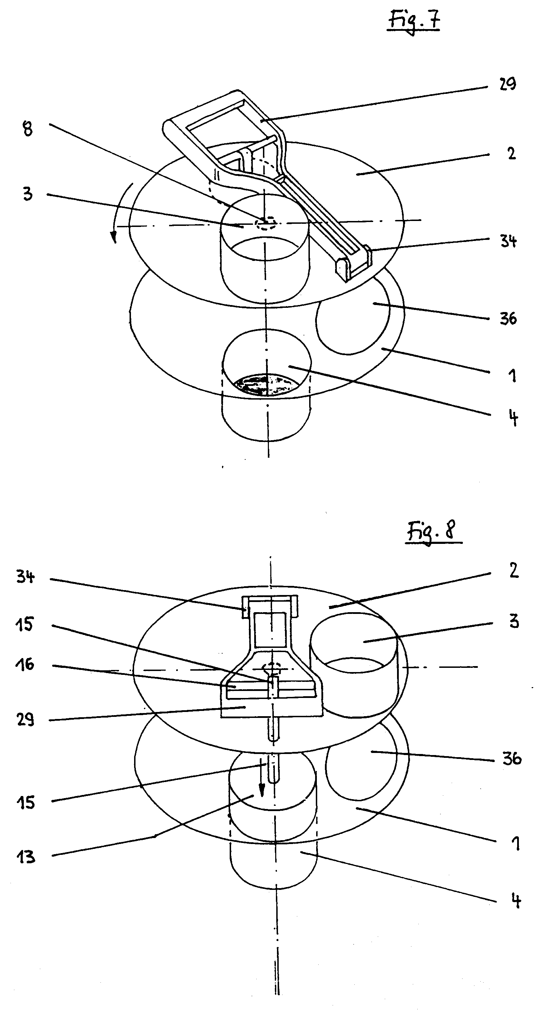

Insbesondere die Figuren 7 - 10 lassen erkennen, daß der hier nur schematisch dargestellte Brühkopf aus einem Brühkopf-Unterteil 1 und einem Brühkopf-Oberteil 2 besteht. Das Unterteil 1 ist gehäusefest und das Oberteil 2 kann sich in Richtung des Pfeiles nach Figur 7 nach Art eines Karussells relativ zum Unterteil drehen. Hierzu ist ein zeichnerisch nicht dargestellter Antrieb vorgesehen oder die Drehung erfolgt auch von Hand, wobei die Funktionspositionen durch Rastungen markiert sind. Bei motorischem Antrieb für die Drehung ist die Steuerung so ausgelegt, daß das drehbare Oberteil in bestimmten Winkelpositionen anhält, um die nachstehend beschriebenen Funktionen wie Einfüllen, Brühen und Ausstoßen des Kuchens, durchzuführen.

Am drehbaren Oberteil 2 ist ein Einfüllschacht 3 vorgesehen, durch den Espressomehl in eine Brühkammer 4 eingefüllt wird, sofern sich der Einfüllschacht 3 über der Brühkammer 4 befindet, wie dies schematisch in den Figuren 2 und 7 dargestellt ist.

Die Figuren 3 und 8 zeigen eine demgegenüber um ca. 120° verdrehte Position, in der ein Brühkolben 13 als Teil des Oberteils 2 sich über der Brühkammer 4 befindet. Der Boden der Brühkammer wird durch einen Hubkolben 5 gebildet, der immer noch abgesenkt ist.

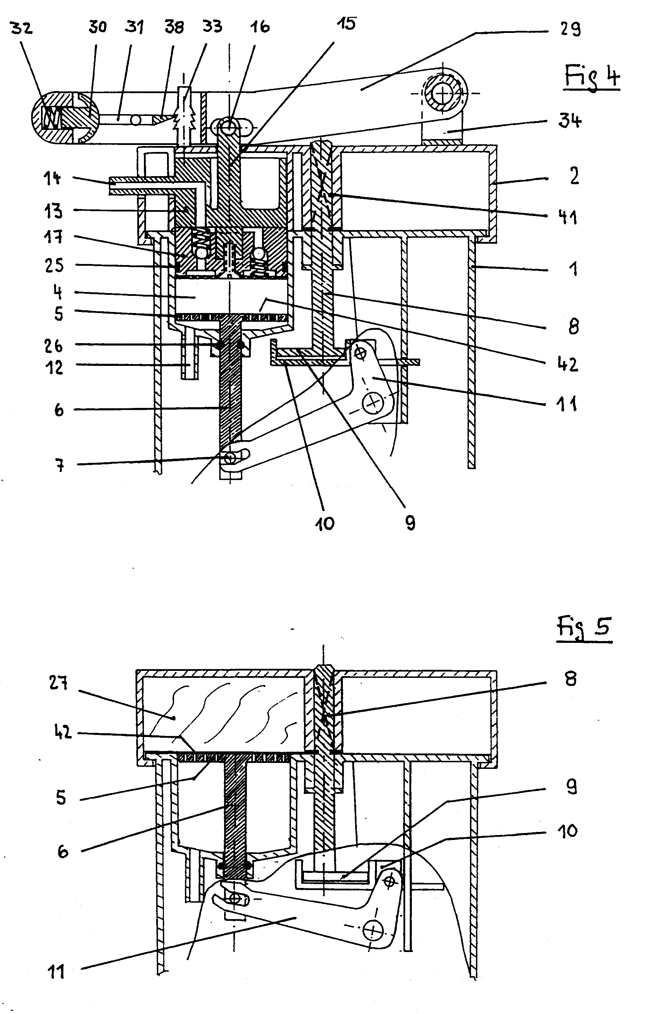

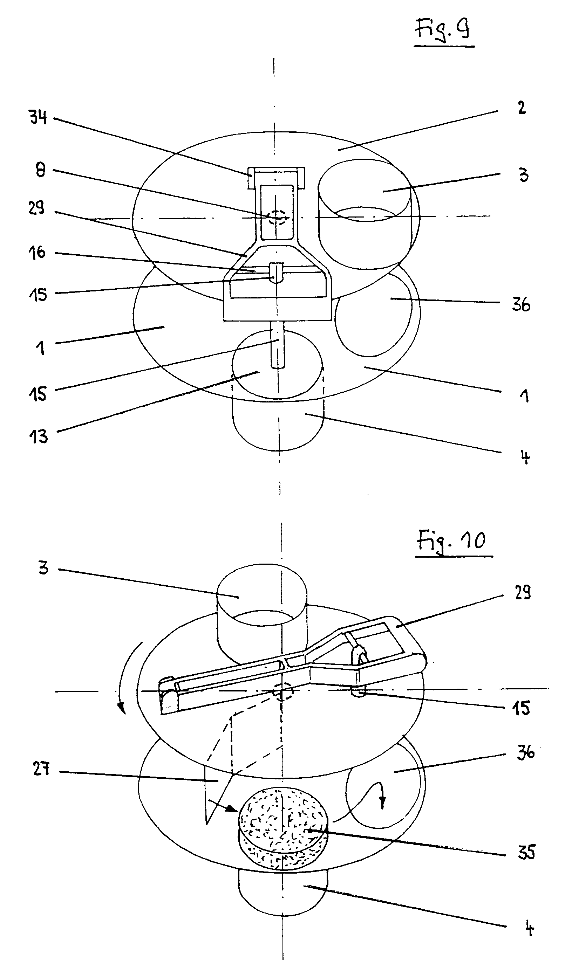

Die Figuren 4 und 9 zeigen, daß die Teile 1,2 eine unveränderte Winkellage haben, daß jetzt aber der Brühkolben in die Brühkammer abgesenkt ist. Dies ist die Brühposition, in der das Espressomehl (Kaffeemehl) durch Zuleiten von Heißwasser über einen Stutzen 12 gebrüht wird.

In den Figuren 5 und 10 ist das Oberteil 2 um ca. 120° weitergedreht, so daß ein Räumflügel 27, der am Oberteil 2 unbeweglich befestigt ist, sich vor dem Kaffeesumpf befindet, der durch das Anheben des Hubkolbens 5 auf das Niveau der Oberseite des gehäusefesten Unterteils 1 gebracht worden ist. Wird jetzt das Oberteil weitergedreht, so transportiert der Räumflügel 27 den Kaffeesumpf 35 zur Seite, wie durch die Pfeile in Figur 10 angedeutet, und zwar zu einer Entsorgungsöffnung 36, durch die der Kaffeesumpf (Kuchen) nach unten fällt und dann entsorgt werden kann.

Vorstehend wurde die allgemeine Arbeitsweise einer Espressomaschine mit einem erfindungsgemäßen Brühkopf erläutert. Im folgenden werden weitere bauliche und funktionelle Einzelheiten des Brühkopfes dargestellt, wozu insbesondere auf die Figuren 2 - 5 Bezug genommen wird.

Der Brühkopf ist, wie erwähnt, in zwei Funktionseinheiten aufgeteilt, nämlich erstens in das Oberteil 2 mit Einfüllschacht 3, Drehachsstecklager 41, Räumflügel 27, Absenkhebel 29 mit Absenkhebellager 34 und mit der Rastvorrichtung, bestehend aus Rastgriff 30, Rastplatte 31, Rastnase 38, Rastfeder 32, Rastbolzen 33 sowie mit der Brühkolbeneinheit, bestehend aus dem Brühkolbenoberteil 13 mit dem Brühkolbenpleuel 15 mit Pleuelbolzen 16, Kaffeeauslauf 14 und dem Brühkolben-Unterteil 17, beinhaltend das Brühsieb 18, Brühsiebschraube 28, Brühkolbendichtung 25 sowie das Cremaventil 19, bestehend aus Ventilkugel 20 und Ventilfeder 21 sowie dem Saugventil, bestehend aus der Ventilkugel 23 und Ventilfeder 24, und zweitens in das Unterteil 1, welches ortsfest mit dem Maschinensockel 40 verbunden ist und die Brühkammer 4 mit dem Wassereinlaufstutzen 12, den Hubkolben 5 mit Hubkolbenpleuel 6, Pleuelbolzen 7, Pleueldichtung 26 und die Entsorgungsöffnung 36 beinhaltet. Weiterhin ist das Unterteil 1 mit der Drehachse 8 ausgerüstet, welche drehbar und unverlierbar im Zentrum des Unterteils gelagert ist und an ihrem unteren Ende eine Steuerkurve 9 trägt, die in Wirkverbindung mit der ebenfalls im Unterteil horizontal verschiebbar gelagerten Kulisse 10 steht, die ihrerseits wiederum die Kippbewegung des ebenfalls im Unterteil gelagerten Steuerhebels 9 und damit die Auf- und Abbewegung des Hubkolbens 5 steuert.

Das Oberteil ist mittels der Drehachse 8 gegenüber dem Unterteil um 360° verdrehbar. Die Funktionspositionen sind durch Rastungen fixiert. Die Drehachse 8 ist im Unterteil drehbar und unverlierbar gelagert und ist an ihrem oberen Ende als form- und kraftschlüssige Steckverbindung ausgebildet, so daß das Oberteil von der Drehachse abgezogen werden kann.

Das Brühkopf-Unterteil und das Brühkopf-Oberteil sind durch am Oberteil befindliche Verriegelungshaken 37, die durch Nuten am Rand des Unterteiles greifen, miteinander verriegelt. Das Ober- und das Unterteil können nur in einer bestimmten Position getrennt werden.

Zur Füllung des Brühkopfes mit Kaffeemehl wird der Einfüllschacht 3 über der Brühkammer 4 positioniert und durch eine Rastung fixiert. Nach dem Einfüllen wird das Oberteil 2 um ca. 120° gedreht und damit der im Oberteil 2 befindliche Brühkolben 13,17 über der Brühkammer 4 positioniert und ebenfalls durch eine Rastung fixiert. Anschließend wird durch Absenken des Absenkhebels 29 der Brühkolben 13,17 über das Brühkolbenpleuel 15 in die Brühkammer 4 eingeführt. Der Absenkvorgang ist beendet, wenn der Brühkolben auf das Kaffeemehl trifft und das Kaffeemehl wird dadurch verdichtet. Dabei rastet die Rastnase 38 der Rastplatte 31 in die Rastfallen der Rastbolzen 33 ein, nachdem die Auflaufschrägen der Rastfallen die Rastplatte 31 gegen die Rastfeder 32 im Handgriff des Absenkhebels 29 gedrückt haben und fixieren dadurch die Stellung des Brühkolbens während des Brühvorganges.

Zum Zubereiten des Kaffeesudes wird das heiße Brühwasser durch den Wassereinlaufstutzen 12 und durch die Löcher 42 des Hubkolbens 5 in die Brühkammer gedrückt. Nachdem es durch das Kaffeemehl gelaufen ist, tritt es durch das Brühsieb in den Kaffeesammelkanal 39 des Brühkolbenunterteils 17. Der Auslauf des Espressos aus dem Auslauf 14 ist bis zu einem Druck von ca. 6 bar durch das aus der Ventilkugel 20 und der Ventilfeder 21 gebildete Cremaventil 19 gesperrt. Bei einem Druck von ca. 6 bar öffnet das Ventil 19 und der Kaffeesud kann über den Kaffeeauslauf ablaufen.

Nach dem Brühvorgang wird durch Zurückziehen des Rastgriffes 30 gegen die Rastfeder 32 die Arretierung Rastnase 38 - Rastbolzen 33 gelöst und der Brühkolben aus der Brühkammer durch Anheben des Absenkhebels 29 gehoben.

Die Rastbolzen 33 haben mehrere Rastfallen, um ein Verdichten unterschiedlicher Kaffeemengen zu ermöglichen (1-Tassen/2-Tassen-Betrieb).

Zur Entsorgung des Kaffeesumpfes wird das Brühkopf-Oberteil 2 in gleichem Drehsinn wie bei der Positionierung des Oberteiles für den Füll- und den Brühvorgang wieder in die Ausgangsstellung = Füllstellung gedreht.

Durch den Drehvorgang wird durch die Wirkverbindung Oberteildrehung 2 - Drehachse 8 - Steuerkurve 9 - Steuerkulisse 10 - Steuerhebel 11 - Hubkolbenpleuel 6 mit Hubkolbenpleuelbolzen 7 der Hubkolben gehoben und der Kaffeesumpf 35 auf die Höhe der Trennebene Oberteil/Unterteil gehoben und von dem nachlaufenden Räumflügel 27 in die Entsorgungsöffnung 36 transportiert.

Durch die spezielle Formgebung des Räumflügels 27 als stumpfer Winkel wird erreicht, daß der Kaffeesumpf großräumig umschließend erfaßt wird und eben durch die Winkelform nur eine zweipunktförmige Berührung mit dem runden Kaffeesumpf erfolgt und dadurch ein Ankleben des Sumpfes am Räumflügel vermieden wird.

Durch die Steuereinrichtung wird außerdem während des Rückdrehens des Brühkopf-Oberteils 2 der Hubkolben 5 wieder in seine Ausgangsstellung Fig. 2 gebracht. Dadurch entsteht in der Brühkammer 4 ein geringer Unterdruck, der das Rücksaugventil 22 - gebildet durch die Kugel 23 und die Feder 24 - öffnet und im Auslauf befindliche Kaffeesudreste zurücksaugt und damit ein Nachtropfen aus dem Auslauf 14 verhindert.

Zur Reinigung des Brühkopfes wird das Brühkopf-Oberteil in eine bestimmte Stellung zum Unterteil gedreht, in der die Verriegelungshaken des Oberteils durch die korrespondierenden Nuten des Unterteils gehoben werden können und damit eine Trennung des Brühkopf-Oberteils vom Brühkopf-Unterteil erfolgen kann.

### Teile-Agenda:

- 1: Brühkopf-Unterteil
- 2: Brühkopf-Oberteil
- 3: Einfüllschacht
- 4: Brühkammer
- 5: Hubkolben
- 6: Hubkolbenpleuel
- 7: Hubkolben-Pleuelbolzen
- 8: Brühkopfdrehachse
- 9: Steuerkurve
- 10: Steuerkulisse
- 11: Steuerhebel
- 12: Wassereinlaßstutzen
- 13: Brühkolbenoberteil
- 14: Kaffeeauslauf
- 15: Brühkolbenpleuel
- 16: Brühkolben-Pleuelbolzen
- 17: Brühkolbenunterteil
- 18: Brühsieb
- 19: Cremaventil
- 20: Cremaventilkugel
- 21: Cremaventilfeder
- 22: Saugventil
- 23: Saugventilkugel
- 24: Saugventilfeder
- 25: Brühkolbendichtung
- 26: Hubkolbendichtung
- 27: Räumflügel
- 28: Brühsiebschraube
- 29: Absenkhebel
- 30: Rastgriff
- 31: Rastplatte
- 32: Rastfeder
- 33: Rastbolzen
- 34: Absenkhebellager
- 35: Kaffeesumpf
- 36: Entsorgungsöffnung
- 37: Oberteil-Verriegelungshaken
- 38: Rastnase
- 39: Kaffee-Sammelkanal
- 40: Maschinensockel
- 41: Drehachsen-Stecklager
- 42: Hubkolbenlöcher

## Patentansprüche

1. Brühkopf einer Espressomaschine, der in ein gehäusefestes Unterteil (1) und in ein bewegliches Oberteil (2) unterteilt ist, mit einer im Unterteil (1) enthaltenen, druckdicht verschließbaren Brühkammer (4) mit einem Einlaß (12) für Heißwasser, mit einer Einfüllöffnung (3) für frisches Espressomehl, mit einem Auslauf (14) für frisch gebrühten Espresso und mit einem im Unterteil (1) in der Brühkammer (4) vorgesehenen, zwangsgesteuerten Hubkolben (5) mit einem Lochboden, über den nach dem Brühen der Kuchen bis zum oberen Rand der Brühkammer (4) angehoben wird, von wo der Kuchen über ein Räumelement (27) seitlich abgeschoben wird, sowie mit einem im Oberteil (2) enthaltenen Brühkolben (13, 17), der von oben in die Brühkammer (4) eintauchen kann,
**dadurch gekennzeichnet,**
daß das Oberteil (2) als ein gegenüber dem Unterteil (1) auf einer Kreisbahn von 360° drehbares Karussel ausgebildet ist und daß durch die Drehbewegung des Oberteils (2) sowohl die Auf- als auch die Abwärtsbewegung des Hubkolbens (5) zur Anhebung und Absenkung des Lochbodens zwangsgesteuert wird.

2. Brühkopf nach Patentanspruch 1,
**dadurch gekennzeichnet,**
daß mit dem Brühkolben (13, 17) ein vorzugsweise von Hand betätigbarer Hebel (29) verbunden ist, über den der Brühkolben (13) abgesenkt bzw. angehoben werden kann.

3. Brühkopf nach Anspruch 1 oder 2,
**dadurch gekennzeichnet,**
daß das Oberteil (2) einen Räumflügel (27) zum seitlichen Abschieben des Kuchens aufweist, der in Bezug auf den Kuchen stumpfwinkelig profiliert ist.

4. Brühkopf nach einem der Ansprüche 1 bis 3,
**dadurch gekennzeichnet,**
daß zur Zwangssteuerung des Hubkolbens (5) über die Relativdrehung zwischen Oberteil (2) und Unterteil (1) Zwangssteuerungsmittel (8,9,10,11,6,7) vorgesehen sind, die eine Steuerkurve (9) und eine Steuerkulisse (10) umfassen.

5. Brühkopf nach einem der Ansprüche 1 - 4,
**dadurch gekennzeichnet,**
daß im Brühkolben (13, 17) im Auslauf (14) für den frisch gebrühten Espresso ein Cremaventil (19) vorgesehen ist, das bei Vorliegen eines bestimmten Überdrucks in der Brühkammer (4) öffnet.

6. Brühkopf nach einem der Ansprüche 1 bis 5,
**dadurch gekennzeichnet,**
daß im Brühkolben (13, 17) im Auslauf (14) für den frisch gebrühten Espresso ein Saugventil (22) vorgesehen ist, das bei Vorliegen eines bestimmten Unterdrucks in der Brühkammer (4) öffnet, der durch die Absenkung des Hubkolbens (5) in seine Ausgangsstellung am Ende der Drehbewegung des Oberteils (2) in der Brühkammer (4) entsteht.

7. Brühkopf nach einem der Ansprüche 1 - 6,
**dadurch gekennzeichnet,**
daß das Brühkolbenunterteil (17) an seiner Unterseite ein Brühsieb (18) trägt.

8. Brühkopf nach einem der Ansprüche 3 bis 7,
**dadurch gekennzeichnet,**
daß mit der Drehbewegung des Oberteils (2) auch der Räumflügel (27) längs einer Kreisbahn bewegt wird und taktgesteuert seine Funktion erfüllt.

9. Brühkopf nach einem der Patentansprüche 1 - 8,
**dadurch gekennzeichnet,**
daß das Oberteil (2) zu Reinigungszwecken vom Unterteil (17) abgehoben werden kann.

10. Brühkopf nach einem der Patentansprüche 2 - 9,
**dadurch gekennzeichnet,**
daß mit dem Hebel (29) eine lösbare Rastverbindung (33,38) zusammenarbeitet, die den Hebel (29) mitsamt dem Brühkolben (13, 17) in der abgesenkten Stellung hält.

11. Brühkopf nach einem der Ansprüche 1 - 10,
**dadurch gekennzeichnet,**
daß durch das Absenken des Brühkolbens (13, 17) das Kaffeemehl verdichtet wird.

12. Brühkopf nach einem der Patentansprüche 1 - 9,
**dadurch gekennzeichnet,**
daß der Einlaß für das Heißwasser als Stutzen (12) ausgebildet ist, der in das gehäusefeste Unterteil (1) einmündet.

## Claims

1. Espresso machine infusion head, which is subdivided into a lower part (1) permanently connected to a casing and a movable upper part (2), having an infusion chamber (4), which is contained in the lower part and which can be closed in a pressure-tight manner, having an inlet (12) for hot water, having a filling opening (3) for fresh espresso grounds, having an outlet (14) for freshly infused espresso and having a positively controlled lifting ram (5), which is provided in the lower part (1) in the infusion chamber (4) and which has a perforated end, by means of which the cake is raised as far as the upper edge of the infusion chamber (4) after the infusion, from whence the cake is pushed off sideways by means of a removal element (27), and having an infusion ram (13, 17), which is contained in the upper part (2) and which can be immersed from above in the infusion chamber (4), characterized in that the upper part (2) is configured as a carousel which can be rotated on a circular track by 360° relative to the lower part (1) and in that both the upwards and downwards motions of the lifting ram (5) for raising and lowering the perforated end are positively controlled by the rotational motion of the upper part (2).

2. Infusion head according to Claim 1, characterized in that a preferably manually actuated lever (29), by means of which the infusion ram (13) can be lowered and raised, is connected to the infusion ram (13, 17).

3. Infusion head according to Claim 1 or 2, characterized in that the upper part (2) has a removal vane (27) for pushing the cake off sideways, which removal vane (27) is profiled with an oblique angle relative to the cake.

4. Infusion head according to one of Claims 1 to 3, characterized in that positive control means (8, 9, 10, 11, 6, 7), which include a control cam (9) and a control slotted link (10), are provided for the positive control of the lifting ram (5) by means of the relative rotation between the upper part (2) and the lower part (1).

5. Infusion head according to one of Claims 1 to 4, characterized in that a creaming valve (19), which opens when a certain positive pressure is present in the infusion chamber (4), is provided in the infusion ram (13, 17) in the outlet (14) for the freshly infused espresso.

6. Infusion head according to one of Claims 1 to 5, characterized in that a suction valve (22) is provided in the infusion ram (13, 17) in the outlet (14) for the freshly infused espresso, which suction valve (22) opens when a certain depression is present in the infusion chamber (4), which depression occurs due to the lowering of the lifting ram (5) into its initial position in the infusion chamber (4) at the end of the rotational motion of the upper part (2).

7. Infusion head according to one of Claims 1 to 6, characterized in that the lower part (17) of the infusion ram has an infusion strainer (18) underneath it.

8. Infusion head according to one of Claims 3 to 7, characterized in that during the rotational motion of the upper part (2), the removal vane (27) is also moved along a circular path and fulfils its function under cyclic control.

9. Infusion head according to one of Claims 1 to 8, characterized in that the upper part (2) can be raised from the lower part (17) for cleaning purposes.

10. Infusion head according to one of Claims 2 to 9, characterized in that a releasable engagement connection (33, 38), which holds the lever (29) together with the infusion ram (13, 17) in the lowered position, interacts with the lever (29).

11. Infusion head according to one of Claims 1 to 10, characterized in that the coffee grounds are compressed by the lowering of the infusion ram (13,17).

12. Infusion head according to one of Claims 1 to 9, characterized in that the inlet for the hot water is configured as a connection piece (12) which opens into the lower part (1), which is permanently connected to the casing.

## Revendications

1. Tête d'ébouillantage d'une machine à expresso, qui est subdivisée en une partie inférieure (1) fixée contre le boîtier et une partie supérieure (2) mobile, comprenant un récipient d'ébouillantage (4) pouvant être fermé hermétiquement, qui est installé dans la partie inférieure (1) et comporte un orifice d'entrée (12) pour l'eau chaude, une ouverture de remplissage (3) réservée à la mouture d'expresso, un orifice de sortie (14) pour l'expresso ébouillanté et un piston de levage (5) à commande forcée, prévu dans la partie inférieure (1), dans le récipient d'ébouillantage (4), lequel piston est muni d'un fond perforé, par lequel, après ébouillantage de l'expresso, la galette de mouture est soulevée jusqu'au bord supérieur du récipient d'ébouillantage (4), où elle est évacuée latéralement par l'intermédiaire d'un élément de raclage (27), et comprenant un piston d'ébouillantage (13, 17), monté dans la partie supérieure (2), qui plonge depuis le haut dans le récipient d'ébouillantage (4), caractérisée en ce que la partie supérieure (2) est conçue comme un élément rotatif susceptible d'effectuer un trajet circulaire de 360° par rapport à la partie inférieure (1) et en ce que le mouvement de rotation de la partie supérieure (2) assure la commande forcée du mouvement de montée et d'abaissement du piston de levage (5), destiné à faire monter et à faire abaisser le fond perforé.

2. Tête d'ébouillantage selon la revendication 1, caractérisée en ce qu'un levier (29), à manoeuvrer de préférence à la main, est assemblé avec le piston d'ébouillantage (13, 17), lequel levier permet d'abaisser ou de remonter le piston d'ébouillantage (13).

3. Tête d'ébouillantage selon la revendication 1 ou 2, caractérisée en ce que la partie supérieure (2) comporte une raclette d'évacuation (27), qui est destinée à évacuer latéralement la galette de mouture et est conçue en forme de cône tronqué par rapport à la galette.

4. Tête d'ébouillantage selon l'une quelconque des revendications 1 à 3, caractérisée en ce que, pour assurer la commande forcée du piston de levage (5) par l'intermédiaire du mouvement de rotation de la partie supérieure (2) par rapport à la partie inférieure (1), il est prévu de monter des moyens de commande forcée (8, 9, 10, 11, 6, 7) qui comprennent une came de commande (9) et une coulisse de commande (10).

5. Tête d'ébouillantage selon l'une quelconque des revendications 1 à 4, caractérisée en ce qu'il est prévu de monter dans le piston d'ébouillantage (13, 17), dans l'orifice de sortie (14) pour l'expresso ébouillanté, une buse de remplissage de crème (19), qui s'ouvre lorsque une surpression déterminée règne dans le récipient d'ébouillantage (4).

6. Tête d'ébouillantage selon l'une quelconque des revendications 1 à 5, caractérisée en ce qu'il est prévu de monter dans le piston d'ébouillantage (13, 17), dans l'orifice de sortie (14) pour l'expresso ébouiillanté, une buse d'aspiration (22) qui s'ouvre lorsque règne dans le récipient d'ébouillantage (4) une sous-pression déterminée, qui résulte de l'abaissement du piston de levage (5) dans sa position de départ, à l'extrémité du mouvement de rotation de la partie supérieure (2) dans le récipient d'ébouillantage (4).

7. Tête d'ébouillantage selon l'une quelconque des revendications 1 à 6, caractérisée en ce que la face inférieure de la partie inférieure du piston d'ébouillantage (17) porte un filtre d'ébouillantage (18).

8. Tête d'ébouillantage selon l'une quelconque des revendications 3 à 7, caractérisée en ce que le mouvement de rotation de la partie inférieure (2) entraîne la raclette d'évacuation (27) dans un mouvement qui suit également une trajectoire circulaire et ladite raclette d'évacuation exerce sa fonction par intermittence.

9. Tête d'ébouillantage selon l'une quelconque des revendications 1 à 8, caractérisée en ce que, pour des raisons de nettoyage, il est possible de détacher la partie supérieure (2) de la partie inférieure (17).

10. Tête d'ébouillantage selon l'une quelconque des revendications 2 à 9, caractérisée en ce qu'une fixation amovible par enclenchement (33, 38) fonctionne conjointement avec le levier (29) et maintient le levier (29), y compris le piston d'ébouillantage (13, 17), dans la position abaissée.

11. Tête d'ébouillantage selon l'une quelconque des revendications 1 à 10, caractérisée en ce que l'abaissement du piston d'ébouillantage (13, 17) est destiné à assurer le tassage de la mouture.

12. Tête d'ébouillantage selon l'une quelconque des revendications 1 à 9, caractérisée en ce que le dispositif d'admission de l'eau chaude est conçu en forme de buse de remplissage (12), qui débouche dans la partie inférieure (1) montée de manière inamovible contre le boîtier.
